# EUROPÄISCHE PATENTSCHRIFT

(11) **EP 2 162 255 B1**
(45) Veröffentlichungstag und Bekanntmachung des Hinweises auf die Patenterteilung: **20.02.2013**
(21) Anmeldenummer: 08761116.6
(22) Anmeldetag: 17.06.2008
(51) Int. Cl.: B23B 27/16, B23C 5/22, B23B 27/14

(54) **NEGATIVE SCHNEIDPLATTE MIT DOPPELT-POSITIVER FREIFLÄCHE**
NEGATIVE INSERT HAVING DOUBLE-POSITIVE CLEARANCE SURFACE
PLAQUETTE DE COUPE NÉGATIVE À DOUBLE SURFACE LIBRE POSITIVE

(30) Priorität: 21.06.2007 DE 102007029071
(43) Veröffentlichungstag der Anmeldung: 17.03.2010
(73) Patentinhaber: CeramTec GmbH, 73207 Plochingen (DE)
(72) Erfinder: ZITZLAFF, Wolfgang, 73230 Kirchheim/Teck (DE); BEN AMOR, Raouf, 73547 Lorch (DE); BLAZEVSKI, Zvonko, 73061 Ebersbach/Fils (DE); SCHÖLLHAMMER, Gerd, 73033 Göppingen (DE); KARATAS, Erdal, 73066 Uhingen (DE)
(74) Vertreter: Uppena, Franz
(86) Internationale Anmeldenummer: PCT/EP2008/057630
(87) Internationale Veröffentlichungsnummer: WO 2008/155331

(56) Entgegenhaltungen:
- EP-A- 1 380 375
- EP-B- 1 536 903
- DE-A1-102005 025 815
- DE-C1- 19 704 931

## Beschreibung

Die Erfindung betrifft eine Wendeschneidplatte gemäβ dem Oberbegriff des Anspruchs 1 und wie z.B. aus EP-A-1380375 bekannt ist.

Keramische Schneidplatten werden nach dem Stand der Technik in der Regel mit einem Freiwinkel α von 0° oder mit einem Freiwinkel α > 0° hergestellt.

Beträgt der Freiwinkel α = 0°, so kann die Schneidplatte beidseitig verwendet werden und es stehen auf der Oberseite und der Unterseite Schneidecken und Schneidkanten zur Verfügung. Bei zum Beispiel einer rechteckigen Schneidplatte stehen auf der Ober- und Unterseite jeweils vier Schneidkanten und Schneidecken, also insgesamt acht Schneidkanten und Schneidecken zur Verfügung.

Ist der Freiwinkel α > 0°, so kann die Schneidplatte nur einseitig verwendet werden, wodurch sich die Anzahl der nutzbaren Schneidecken oder Schneidkanten gegenüber der Ausführung mit α = 0° Freiwinkel halbiert.

Aus der US 3,490,117 ist eine Wendeschneidplatte bekannt, die auf der Umfangsgeometrie doppelseitig unterhalb der Schneidecken und Schneidkanten umlaufende positive Freiflächen aufweist, die gegenüber den Schneidecken und Schneidkanten eingezogen sind, wodurch ein beidseitig positiver Freiwinkel geschaffen ist. Nachteilig hieran ist, dass diese Wendeschneidplatte zum Spannen auf Trägerwerkzeugen einen der Umfangsgeometrie der Schneidplatte angepassten Plattensitz benötigen, wodurch sie nicht in herkömmlichen Klemmhaltern einbaubar sind. Hierdurch ist die Austauschbarkeit und Anwendung eingeschränkt und erschwert.

Der Erfindung liegt die Aufgabe zugrunde, eine Wendeschneidplatte nach dem Oberbegriff des Anspruchs 1 so zu verbessern, dass sie in herkömmlichen Klemmhaltern verwendet werden kann, ohne die Merkmale und Vorteile einer positiven Freifläche zu verlieren. Weiterhin soll die Wendeschneidplatte derart ausgestaltet sein, dass ein Bruch der Schneidkanten und Schneidecken seltener auftritt.

Erfindungsgemäß wird diese Aufgabe dadurch gelöst, dass zwischen zwei sich auf der Umfangsgeometrie in Bezug auf die Oberseite und Unterseite gegenüberliegenden Freiflächen ein gegenüber den tiefsten Stellen der Freiflächen erhabener Bund angeordnet ist, dessen Oberfläche als Anlagefläche in Trägerwerkzeugen dient. Hierdurch ist ein Einbau in herkömmliche Klemmhalter ermöglicht, ohne die Merkmale und Vorteile einer positiven Freifläche zu verlieren.

In einer Ausführungsform ist der Bund auf der Umfangsgeometrie umlaufend ausgebildet, wodurch die Anlagefläche maximiert ist und ein Einbau in jeder möglichen Orientierung erfolgen kann.

in bevorzugter Ausgestaltung besteht die Wendeschneidplatte aus einer Keramik. Gerade in Keramiken ergibt sich eine extrem lange Einsatzzeit für die Schneidplatte.

In einer erfinderischen Ausgestaltung ist die Länge der Freiflächen kleiner als die halbe Dicke der Wendeschneidplatte. Hierdurch kann der Bund mittig auf der Umfangsgeometrie angeordnet werden und weist auch eine hinreichende Breite auf.

Zur Verstärkung der Schneidkanten und Schneidecken sind in einer Ausführungsform die Freiflächen im unmittelbar an die Schneidkanten und Schneidecken angrenzenden Anlagebereich im Wesentlichen rechtwinklig zur Oberseite und Unterseite der Wendeschneidplatte ausgebildet. Die Schneidplatte kann hierdurch sowohl mit den beiden Anlagebereichen als auch mit dem erhabenen Bund an Anlageflächen im Trägerwerkzeug anliegen. Dieser Anlagebereich verstärkt zugleich die Schneidecken und Schneidkanten.

In einer Ausführungsform der Erfindung befindet sich die Oberfläche des Bundes in Bezug auf die Längsachse der Wendeschneidplatte auf derselben oder einer größeren radialen Höhe wie die der Schneidkanten und Schneidecken. Hierdurch kann die Schneidplatte in beliebiger Weise an Anlageflächen im Trägerwerkzeug anliegen.

In einer Ausführungsform der Erfindung befinden sich der Anlagebereich der Freiflächen und die Oberfläche des Bundes in Bezug auf die Längsachse der Wendeschneidplatte auf derselben radialen Höhe oder die radiale Höhe der Oberfläche des Bundes ist in Bezug auf die Längsachse der Wendeschneidplatte größer als die radiale Höhe des Anlagebereichs der Freiflächen.

Die Freiflächen sind In einer Ausführungsform durch Umfangsschleifen eingebracht. In einer anderen Ausführungsform sind die Freiflächen durch entsprechendes Pressen des Grünlings und anschließendes Sintern eingebracht. Die zweite Ausführungsform bezieht sich auf Schneidplatten aus einer Keramik.

Nachfolgend wird die Erfindung unter anderem anhand von Figuren näher erläutert.

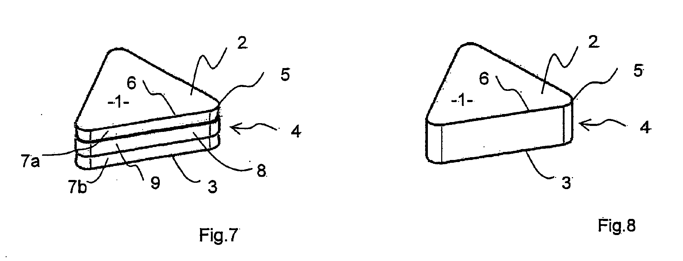

Figur 8 zeigt eine Schneidplatte nach dem Stand der Technik. Es stehen nur insgesamt drei Schneidecken 5 und drei Schneidkanten 6 zur Verfügung.

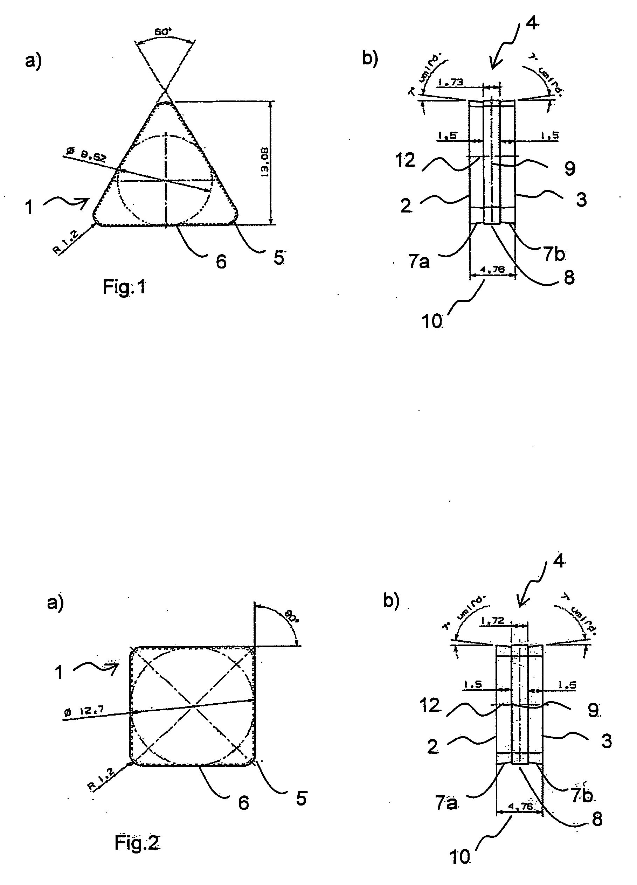

In den Figuren 1 bis 7 ist jeweils eine erfindungsgemäße Wendeschneidplatte 1 gezeigt und zwar in einer Draufsicht (Figuren 1 a, 2a, 3a, 4a, 5a, 6a) und einer Ansicht der jeweiligen Umfangsgeometrie 4 (Figuren 1 b, 2b, 3b, 4b, 5b, 6b, 6c). Gleiche Bezugszeichen benennen gleiche Gegenstände.

Alle gezeigten erfindungsgemäßen Wendeschneidplatten 1, ob dreieckig, quadratisch, rechteckig, kubisch oder rund ausgebildet, weisen eine Oberseite 2 und eine Unterseite 3 auf, die jedoch identisch aufgebaut sind. Auf den beiden Seiten 2, 3 können Mulden 13 eingebracht sein zur Befestigung auf einem Schneidwerkzeug. Eine bevorzugte Mulde wird weiter unten beschrieben.

Die beiden Seiten 2, 3 sind über eine Umfangsgeometrie 4 miteinander verbunden. Am Übergang von den Seiten 2, 3 zur Umfangsgeometrie sind Schneidecken 5 und Schneidkanten 6 angeordnet, die zur spanabhebenden Bearbeitung an metallischen Werkstücken eingesetzt werden.

Damit die Wendeschneidplatten 1 eine maximal mögliche Anzahl an diesen Schneidecken 5 und Schneidkanten 6 aufweisen, ist die Umfangsgeometrie 4 über zwei Freiflächen 7a, 7b eingezogen, so dass ein beidseitig positiver Freiwinkel geschaffen ist.

Die Erfindung beschreibt somit eine Wendeschneidplatte 1, die zusätzlich zu den nach DIN/ISO genormten Merkmalen einer negativen Schneidplatte (Freiwinkel = 0°) oder anderen bekannten Merkmalen, wie doppelseitig unterhalb der Schneidkante 6 umlaufende Freiwinkel, ein wesentliches erfinderisches Merkmal aufweist, welches es ermöglicht, diese neuartige Wendeschneidplatte 1 weiterhin in herkömmlichen Klemmhaltern bzw. Schneidwerkzeugen zu verwenden, ohne die anderen bekannten Merkmale und Vorteile einer positiven Freifläche zu verlieren.

Wendeschneidplatten nach dem Stand der Technik benötigen zum Spannen auf Trägerwerkzeugen einen der Umfangsgeometrie 4 angepassten Plattensitz, wodurch die Austauschbarkeit und Anwendung kompliziert und erschwert ist.

Diese Erfindung nutzt nun die Möglichkeit der umlaufenden positiven Freiflächen 7a, 7b, ohne dass sich die beidseitig angebrachten Freiflächen 7, 7b in einem tiefsten Punkt am Umfang des Schneidkörpers bzw. der Umfangsgeometrie treffen. Erfindungsgemäß ist die Länge der Freiflächen 7a, 7b kleiner als die halbe Dicke 10 der Wendeschneidplatte 1 und läuft dann meist rechtwinklig zur Freifläche 7a, 7b nach außen aus. Dieses ermöglicht das Stehenbleiben eines erhabenen Bundes 8, bzw. einer in der Mitte der Umfangsgeometrie angeordneten Oberfläche 9 des Bundes 8. Diese am Umfang entlanglaufende Oberfläche 9 dient als Anlagefläche der Wendeschneidplatte 1 in herkömmlichen Trägerwerkzeugen. Im Prinzip ist dieser erfindungsgemäße Schneidkörper bzw. Wendeschneidplatte zumindest in der Klemm- und Spannfunktion auf einem Trägerwerkzeug einer handelsüblichen DIN/ISO Wendeschneidplatte gleichzusetzen. Mit dem Bezugszeichen 12 ist in den Figuren die Längsachse der Wendeschneidplatte 1 bezeichnet.

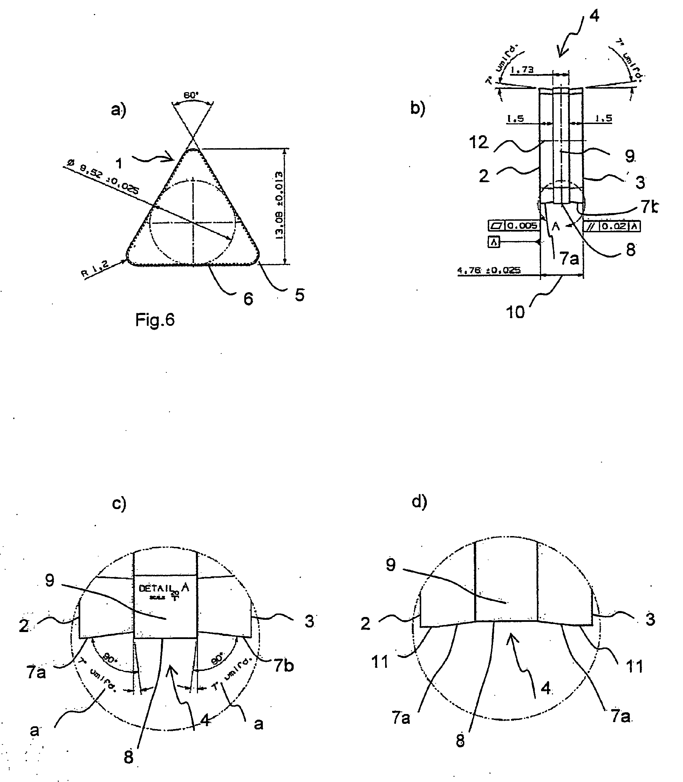

Figur 6d zeigt, dass in einer erfinderischen Ausgestaltung die Freiflächen 7a, 7b im unmittelbar an die Schneidkanten 6 und Schneidecken 5 angrenzenden Anlagebereich 11 im Wesentlichen rechtwinklig zur Oberseite 2 und Unterseite 3 der Wendeschneidplatte 1 ausgebildet sind. Hierdurch sind die Schneidecken 5 und Schneidkanten 5 verstärkt, wodurch ein Bruch der Schneidkanten und Schneidecken seltener auftritt.

Die Funktion dieses erfindungsgemäßen Wendeschneidplatte 1 beinhaltet jedoch die Merkmale einer positiven Wendeschneidplatte mit dem besonderen Vorzug, die doppelte Menge an Schneidecken zur Verfügung zu stellen, als handelsübliche positive Wendeschneidplatten.

Erfindungsgemäß kann diese doppelt-positive Freifläche 7a, 7b an negativen Wendeschneidplatten 1 durch Umfangsschleifen angebracht werden. Ein Anbringen mittels Pressen und Sintern ist in Presswerkzeugen mit entsprechenden Schiebern auch möglich.

Der Freiwinkel (Bezugszeichen α, siehe Figur 6c) an einer Werkzeugschneide beschreibt bei der spanabhebenden Bearbeitung den Winkel des Freiraumes zwischen Werkzeug und bearbeiteter Fläche. Er ist bei typischen Arbeitsgängen wie Drehen und Fräsen von Bedeutung und verringert die Reibung zwischen beiden Teilen.

Der Freiwinkel wird immer gerade so groß gewählt, dass das Werkzeug, je nach Material, genügend frei schneidet. Einen kleinen Winkel wählt man bei harten, kurzspanenden Werkstoffen, wie beispielsweise hochlegierten Stählen, einen großen Freiwinkel hingegen bei weichen, plastisch verformbaren Werkstoffen, etwa bei Kunststoffen.

Der Freiwinkel wird durch die Schneidenebene und Freifläche gebildet und senkrecht zur Hauptschneide gemessen. Er bildet zusammen mit dem Keilwinkel den Schnittwinkel. Freiwinkel, Keilwinkel und Spanwinkel ergeben in der Summe immer 90°.

Die Erfindung beschreibt somit eine Modifikation der Freifläche, die es ermöglicht auch Schneidplatten mit einem Freiwinkel α > 0° herzustellen, ohne dadurch die Anzahl der nutzbaren Schneidecken (im Vergleich zu 0° Freiwinkel) zu reduzieren.

Die Modifikation der Freiflächen erfolgt, wie in den Figuren dargestellt, durch die Erzeugung eines beidseitig positiven Freiwinkels α. Hierdurch kommt es zur Plattenmitte hin zu einer Einschnürung oder Verjüngung der Umfangsgeometrie 4. Diese Verjüngung ist beidseitig eines Bundes 8 angeordnet und befindet sich bevorzugt in der Plattenmitte.

Die Erfindung ist also dadurch gekennzeichnet, dass die Umfangsgeometrie der Seitenflächen oder Freiflächen gegenüber den Schneidecken 5 und Schneidkante 6 eingezogen ist. In der Mitte der Schneidplatte 1 befindet sich ein umlaufender Bund 8, wobei sich auf der Umfangsgeometrie 4 zwei Verjüngungen bzw. Freiflächen 7a, 7b befinden. Die Freiflächen 7a, 7b verlaufen bevorzugt geradlinig, können aber auch unregelmäßig ausgebildet sein. Wichtig ist nur der positive Freiwinkel zur Oberseite 2 bzw. Unterseite 3 der Wendeschneidplatte 1.

In erfinderischer Ausgestaltung liegt der Freiwinkel α zwischen 3° - 30°, bevorzugt bei 12°.

Die Figuren 1, 2, 6 und 7 zeigen Wendeschneidplatten 1 mit einer ebenen und geschlossenen Ober- 2 und Unterseite 3. Die Wendeschneidplatten können auch eine Mulde 13 oder eine mittige Durchgangsbohrung 10 aufweisen.

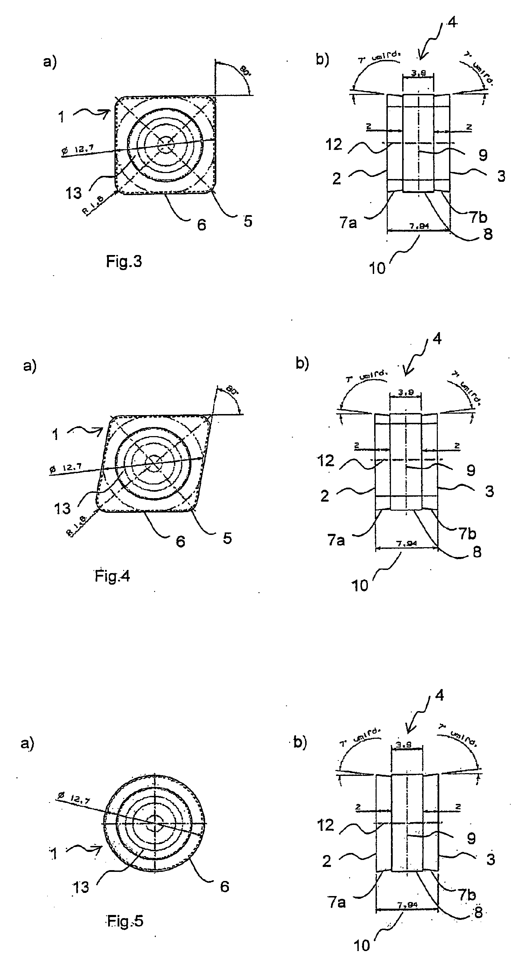

In der Ausführungsform gemäß den Figuren 3, 4, 5 ist eine Mulde 13 eingebracht, die in der WO 03/013770 A1 beschrieben ist. Die Mulde 13 ist kreisförmig ausgebildet und weist in der Mitte eine kugel- bzw. kreisförmige Erhebung auf. Bevorzugt liegt die Spitze der Erhebung oberhalb des Muldenbodens und unterhalb der Schneidplattenoberseite. Zum Einspannen auf einem Schneidwerkzeug greift eine Spannpratze mit angepasster geformter Nase formschlüssig in die Mulde 13 der Schneidplatte 1 ein. Diese Mulde 13 dient zur formschlüssigen Spannung auf einem Trägerkörper. Besonders für ziehende Schnitte, bei dem die Schneidplatte durch die wirkenden Schnittkräfte aus seinem Sitz gezogen werden könnte, bietet sich diese Schneidplatte mit der besonderen Mulde 13 an. Zur weiteren Beschreibung dieser Mulde 13 siehe die genannte Druckschrift.

Damit Läpp- oder Schleifbearbeitungen der Schneidplattenoberseiten die Klemmeigenschaften der Schneidplatte 1 nicht beeinflussen, ist in einer anderen erfindungsgemäßen Ausführungsform die Mulde 13 so ausgebildet, wie es in der EP 1 536 903 B1 beschrieben ist. In diesen Fall ist eine erste Spannmulde zum Einspannen in das Schneidwerkzeug eingebracht und ist koaxial zur ersten Spannmulde eine zweite Spannmulde angeordnet, wobei die erste Spannmulde tiefer als die zweite Spannmulde und beide tiefer als die Schneidplattenoberseite angeordnet sind. Beim Klemmen dieser Schneidplatte in einem Werkzeug liegt eine Spannpratze des Werkzeugs auf der zweiten Spannmulde auf und greift zum Beispiel mit einer Nase in die erste Spannmulde ein. Der Abstand von der Auflagefläche der Spannpratze zur Mulde ist damit immer konstant und ist nicht abhängig von Läpp- oder Schleifbearbeitungen der Schneidplattenoberseiten.

In einer erfindungsgemäßen Ausführungsform besteht die Schneidplatte aus PCBN oder aus CBN. Beschrieben ist dies in der WO 2005/021192 A1. Die Spannmulde kann wieder kreisförmig ausgebildet sein und in der Mitte eine kugel- bzw. kreisförmige Erhebung aufweisen, wie eben beschrieben. Die entsprechende Kontur der Spannmulde ist bevorzugt über eine entsprechende Formgebung des Grünkörpers eingebracht und der so hergestellte Grünkörper wird dann getrocknet und gesintert.

Die Schneidplatte kann auch mit einer Beschichtung versehen sein.

## Patentansprüche

1. Wendeschneidplatte (1) zum Einbau in Trägerwerkzeugen zur spanenden Bearbeitung von Werkstücken mit einer Oberseite (2) und einer Unterseite (3) und mit einer die Oberseite (2) und Unterseite (3) verbindenden Umfangsgeometrie (4), wobei am Übergang von der Oberseite (2) und Unterseite (3) zu der Umfangsgeometrie (4) Schneidecken (5) und Schneidkanten (6) angeordnet sind und die Umfangsgeometrie (4) doppelseitig unterhalb der Schneidecken (5) und Schneidkanten (6) umlaufende positive Freiflächen (7a, 7b) aufweist, die gegenüber den Schneidecken (5) und Schneidkanten (6) eingezogen sind, wodurch ein beidseitig positiver Freiwinkel (α) geschaffen ist, und zwischen zwei sich auf der Umfangsgeometrie (4) in Bezug auf die Oberseite (2) und Unterseite (3) gegenüberliegenden Freiflächen (7a, 7b) ein gegenüber den tiefsten Stellen der Freiflächen (7a, 7b) erhabener Bund (8) angeordnet ist, dessen Oberfläche (9) als Anlagefläche in Trägerwerkzeugen dient, **dadurch gekennzeichnet, dass** die Freiflächen (7a, 7b) im unmittelbar an die Schneidkanten (6) und Schneidecken (5) angrenzenden Anlagebereich (11) im Wesentlichen rechtwinklig zur Oberseite (2) und Unterseite (3) der Wendeschneidplatte (1) ausgebildet sind.

2. Wendeschneidplatte nach Anspruch 1, **dadurch gekennzeichnet, dass** der Bund (8) auf der Umfangsgeometrie (4) umlaufend ausgebildet ist.

3. Wendeschneidplatte nach Anspruch 1 oder 2, **dadurch gekennzeichnet, dass** die Wendeschneidplatte (1) aus einer Keramik besteht.

4. Wendeschneidplatte nach einem der Ansprüche 1 bis 3, **dadurch gekennzeichnet, dass** die Länge der Freiflächen (7a, 7b) kleiner als die halbe Dicke (10) der Wendeschneidplatte (1) ist.

5. Wendeschneidplatte nach einem der Ansprüche 1 bis 4, **dadurch gekennzeichnet, dass** sich die Oberfläche (9) des Bundes (8) in Bezug auf die Längsachse (12) der Wendeschneidplatte (1) auf derselben oder einer größeren radialen Höhe wie die der Schneidkanten (6) und Schneidecken (5) befindet.

6. Wendeschneidplatte nach Anspruch 4 oder 5, **dadurch gekennzeichnet, dass** sich der Anlagebereich (11) der Freiflächen (7a, 7b) und die Oberfläche (9) des Bundes (8) in Bezug auf die Längsachse (12) der Wendeschneidplatte (1) auf derselben radialen Höhe befinden oder die radiale Höhe der Oberfläche (9) des Bundes (8) in Bezug auf die Längsachse (12) der Wendeschneidplatte (1) größer ist als die radiale Höhe des Anlagebereichs (11) der Freiflächen (7a, 7b).

7. Wendeschneidplatte nach einem der Ansprüche 1 bis 6, **dadurch gekennzeichnet, dass** die Freiflächen (7a, 7b) durch Umfangsschleifen eingebracht sind.

8. Wendeschneidplatte nach einem der Ansprüche 1 bis 7, **dadurch gekennzeichnet, dass** die Freiflächen (7a, 7b) durch entsprechendes Pressen des Grünlings und anschließendes Sintern eingebracht sind.

## Claims

1. An indexing cutting insert (1) for installation in tool holders for machining workpieces, having an upper side (2) and a lower side (3) and a peripheral geometry (4) connecting the upper side (2) and the lower side (3), wherein cutter corners (5) and cutter edges (6) are arranged at the transition between the upper side (2) and lower side (3) and the peripheral geometry (4), and the peripheral geometry (4) has positive tool flanks (7a, 7b) which run around below the cutter corners (5) and cutter edges (6) on both sides and which are undercut in relation to the cutter corners (5) and cutter edges (6), as a result of which a clearance angle (α) which is positive on both sides is produced, and there is arranged, between two tool flanks (7a, 7b) that are opposed on the peripheral geometry (4) in relation to the upper side (2) and lower side (3), a collar (8) which is raised in relation to the most recessed points on the tool flanks (7a, 7b) and whose surface (9) serves as an abutment face in tool holders, **characterised in that** the tool flanks (7a, 7b) in the abutment region (11) that is directly adjacent to the cutter edges (6) and cutter corners (5) are constructed to be substantially at right angles to the upper side (2) and lower side (3) of the indexing cutting insert (1).

2. An indexing cutting insert according to Claim 1, **characterised in that** the collar (8) is constructed to run around the peripheral geometry (4).

3. An indexing cutting insert according to Claim 1 or 2, **characterised in that** the indexing cutting insert (1) is made of a ceramic.

4. An indexing cutting insert according to one of Claims 1 to 3, **characterised in that** the length of the tool flanks (7a, 7b) is less than half the thickness (10) of the indexing cutting insert (1).

5. An indexing cutting insert according to one of Claims 1 to 4, **characterised in that** the surface (9) of the collar (8) is located, with respect to the longitudinal axis (12) of the indexing cutting insert (1), at the same or at a greater radial height than that of the cutter edges (6) and cutter corners (5).

6. An indexing cutting insert according to Claim 4 or 5, **characterised in that** the abutment region (11) of the tool flanks (7a, 7b) and the surface (9) of the collar (8) are located, with respect to the longitudinal axis (12) of the indexing cutting insert (1), at the same radial height, or the radial height of the surface (9) of the collar (8), with respect to the longitudinal axis (12) of the indexing cutting insert (1), is greater than the radial height of the abutment region (11) of the tool flanks (7a, 7b).

7. An indexing cutting insert according to one of Claims 1 to 6, **characterised in that** the tool flanks (7a, 7b) are shaped by peripheral grinding.

8. An indexing cutting insert according to one of Claims 1 to 7, **characterised in that** the tool flanks (7a, 7b) are shaped by appropriate pressing of the green body and then sintering.

## Revendications

1. Plaquette de coupe réversible (1) destinée à être montée dans des porte-outils pour l'usinage de pièces par enlèvement de copeaux, comprenant un côté supérieur (2) et un côté inférieur (3) et comprenant une géométrie périphérique (4) qui relie le côté supérieur (2) et le côté inférieur (3), des coins de coupe (5) et des arêtes de coupe (6) étant disposés au niveau de la transition du côté supérieur (2) et du côté inférieur (3) avec la géométrie périphérique (4), et la géométrie périphérique (4) présentant des deux côtés, sous les coins de coupe (5) et arêtes de coupe (6), des faces de dépouille positives (7a, 7b) périphériques qui sont en retrait par rapport aux coins de coupe (5) et aux arêtes de coupe (6), de façon à créer de chaque côté un angle de dépouille (α) positif et, entre deux faces de dépouille (7a, 7b) opposées sur la géométrie périphérique (4) par rapport au côté supérieur (2) et au côté inférieur (3), étant disposé un épaulement (8) en relief par rapport aux points les plus bas des faces de dépouille (7a, 7b), sa surface (9) servant de surface d'appui dans des porte-outils, **caractérisée en ce que** les faces de dépouille (7a, 7b) sont formées dans la zone d'appui (11) directement adjacente aux coins de coupe (5) et aux arêtes de coupe (6), sensiblement à angle droit par rapport au côté supérieur (2) et au côté inférieur (3) de la plaquette de coupe réversible (1).

2. Plaquette de coupe réversible selon la revendication 1, **caractérisée en ce que** l'épaulement (8) est réalisé périphériquement sur la géométrie périphérique (4).

3. Plaquette de coupe réversible selon la revendication 1 ou 2, **caractérisée en ce que** la plaquette de coupe réversible (1) est en céramique.

4. Plaquette de coupe réversible selon une des revendications 1 à 3, **caractérisée en ce que** la longueur des faces de dépouille (7a, 7b) est inférieure à la moitié de l'épaisseur (10) de la plaquette de coupe réversible (1).

5. Plaquette de coupe réversible selon une des revendications 1 à 4, **caractérisée en ce que** la surface (9) de l'épaulement (8) se trouve, par rapport à l'axe longitudinal (12) de la plaquette de coupe réversible (1), à une hauteur radiale identique ou supérieure à celle des arêtes de coupe (6) et coins de coupe (5).

6. Plaquette de coupe réversible selon la revendication 4 ou 5, **caractérisée en ce que**, par rapport à l'axe longitudinal (12) de la plaquette de coupe réversible (1), la zone d'appui (11) des faces de dépouille (7a, 7b) et la surface (9) de l'épaulement (8) se trouvent à la même hauteur radiale, ou la hauteur radiale de la surface (9) de l'épaulement (8) par rapport à l'axe longitudinal (12) de la plaquette de coupe réversible (1) est supérieure à la hauteur radiale de la zone d'appui (11) des faces de dépouille (7a, 7b).

7. Plaquette de coupe réversible selon une des revendications 1 à 6, **caractérisée en ce que** les faces de dépouille (7a, 7b) sont réalisées par rectification périphérique.

8. Plaquette de coupe réversible selon une des revendications 1 à 7, **caractérisée en ce que** les faces de dépouille (7a, 7b) sont réalisées par pressage correspondant du comprimé cru et par frittage consécutif.
